Europäisches Patentamt

European Patent Office

Office européen des brevets

(19)

(11) Numéro de publication: **0 197 866**
**B1**

(12) **FASCICULE DE BREVET EUROPEEN**

(45) Date de publication du fascicule du brevet:
**10.01.90**

(51) Int. Cl.⁴: **G 01 N 21/07**

(21) Numéro de dépôt: **86420074.6**

(22) Date de dépôt: **13.03.86**

(54) **Procédé pour la réalisation d'analyses médicales d'un échantillon liquide à l'aide de réactifs secs, et dispositif pour la mise en oeuvre du procédé.**

(30) Priorité: **26.03.85 FR 8504477**

(43) Date de publication de la demande:
**15.10.86 Bulletin 86/42**

(45) Mention de la délivrance du brevet:
**10.01.90 Bulletin 90/2**

(84) Etats contractants désignés:
**AT BE CH DE GB IT LI LU NL SE**

(56) Documents cités:
**EP-A- 0 084 983**
**EP-A- 0 132 510**
**FR-A- 2 524 874**

(73) Titulaire: **Guigan, Jean, 9, rue Jean Mermoz,
F-75008 Paris (FR)**

(72) Inventeur: **Guigan, Jean, 9, rue Jean Mermoz,
F-75008 Paris (FR)**

(74) Mandataire: **Laurent, Michel et al, Cabinet LAURENT et
GUERRE B.P. 32, F-69131 Ecully Cédex (FR)**

## Description

La présente invention concerne un procédé pour la réalisation d'analyses médicales d'un échantillon liquide à l'aide de réactifs secs, et un dispositif pour la mise en oeuvre du procédé.

La présente invention a pour but de mettre en oeuvre un procédé d'analyse d'une très faible dose d'échantillon liquide, de l'ordre de quelques microlitres. Ceci est particulièrement intéressant dans le cas d'analyses médicales, car il devient possible, par exemple, d'éviter au patient de subir des prises de sang au moyen de seringues, et d'utiliser simplement quelques gouttes de sang recueillies au bout d'un doigt.

Elle a également pour but de mettre au point un procédé permettant de réaliser la plupart des analyses médicales demandées jusqu'à présent (de l'ordre de 300).

Elle a enfin pour but de mettre en oeuvre un procédé bon marché et simple pour le praticien lui-même qui se sert de barrettes stockées contenant des réactifs secs et un diluant.

Dans le document FR-A-2 524 874, le Demandeur a décrit un procédé du type en question faisant appel à une barrette de conditionnement, constituée d'une pluralité de cellules reliées entre elles par des capillaires. Cette barrette est disposée sur un plateau tournant, de sorte que le transfert du liquide à analyser d'une cellule à l'autre s'effectue par application de la force centrifuge. La barrette pivote sur le plateau selon les différentes phases du procédé. Cette technique est délicate à réaliser économiquement et avec fiabilité.

Dans le document EP-A-0084 983 du Demandeur, on a décrit une barrette longitudinale de conditionnement pour analyses multiples en matière plastique, constituée par un boîtier compartimenté fermé par un couvercle, comprenant dans l'ordre:
- un réceptacle pour l'échantillon à analyser,
- un réservoir de diluant,
- une cuve mélangeuse,
- puis une série de cuves de réaction alignées parallèlement le long d'une paroi longitudinale, contenant les réactifs secs, reliées par des conduits capillaires à une conduite commune.

On place cette barrette sur une console d'analyse comportant également un plateau central rotatif et un portique diamétral portant les moyens d'analyse (photomètre). Malheureusement, cette solution ne s'est guère développée, car du fait de la disposition des réactifs en cascade, ceux-ci ont la fâcheuse tendance à se polluer entre eux, ce qui rend la mesure imprécise et même parfois erronée.

L'invention pallie ces inconvénients. La présente invention a pour objet un procédé pour la réalisation d'analyses médicales d'un échantillon liquide à l'aide de réactifs secs, du type dans lequel on utilise:

d'une part, des barrettes longitudinales de conditionnement en matière plastique transparente, comportant un boîtier fermé par un couvercle, ledit boîtier étant compartimenté de manière à former:
- un réceptacle pour ledit échantillon liquide communiquant avec une ouverture dudit couvercle fermée par un bouchon,
- un réservoir destiné à contenir un liquide diluant,
- une cuve mélangeuse,
- une série de cuves de réaction alignées parallèlement le long d'une des parois latérales longitudinales de la barrette, susceptibles de contenir respectivement des réactifs solides, reliées par des conduits capillaires à une conduite commune communiquant par un conduit capillaire avec la cuve mélangeuse et faisant office de conduite de trop-plein aboutissant à une cuve commune de trop-plein;

et d'autre part, une console d'analyse comportant un plateau central tournant et un portique diamétral surplombant l'ensemble tournant et supportant des moyens optiques d'analyse, tels qu'un photomètre.

Ce procédé selon l'invention se caractérise:

d'une part, en ce qu'on utilise la barrette dont:
- le réceptacle est relié par un conduit capillaire à une cellule calibrée, elle-même reliée à une chambre de trop-plein;
- le réservoir de diluant est situé au-dessous de la dite cellule calibrée et communique par un orifice avec la face du boitier fermée par le couvercle;
- la cuve mélangeuse est située à une extrémité de la barrette et communique par des conduits capillaires respectivement avec la dite cellule calibré et ledit réservoir de diluant, tous les tubes capillaires précités étant parallèles aux parois latérales longitudinales de la barrette;

d'autre part, en ce qu'on utilise le plateau central rotatif de la console présentant une rainure diamétrale dont la longueur est au moins égale à celle de deux barrettes de conditionnement alignées, et dont la largeur est au moins égale à celle d'une telle barrette, ledit plateau présentant en outre une couronne périphérique coplanaire et coaxiale comportant des logements radiaux pour une pluralité de barrettes de conditionnement et susceptibles d'être animées d'un mouvement de rotation;

et enfin en ce que:
- après avoir introduit un échantillon à analyser dans ledit réceptacle, on place la barrette dans un logement radial de la couronne périphérique, de manière à ce que la cuve mélangeuse soit la partie de la barrette la plus proche du centre du plateau central, puis on translate cette barrette dans un rayon de ladite rainure diamétrale, de manière à ce que la cuve mélangeuse se trouve au voisinage du centre du plateau central;
- on réalise une première centrifugation, ce qui a pour effet de remplir d'échantillon la cellule calibrée;
- puis, on translate la barrette dans la rainure diamétrale, de manière à ce que la cuve mélangeuse se trouve au voisinage de la périphérie du plateau central;
- on réalise une seconde centrifugation, ce qui a pour effet de remplir la cuve mélangeuse en échantillon et en diluant et d'y réaliser le mélange;
- on translate la barrette dans la rainure diamétrale dans la même position que pour la première centrifugation;
- puis, on réalise une troisième centrifugation ayant pour effet de remplir les cuves de réaction et la cuve de trop-plein à partir de la cuve mélangeuse;
- enfin, on remet la barrette en place dans le logement radial de la couronne périphérique, et on lit les réactions dans les diverses cuves au moyen du photomètre et on transmet les résultats des mesures photométriques à un ordinateur programmé.

La présente invention a également pour objet une barrette de conditionnement pour la mise en oeuvre du procédé précédent. Cette barrette est constituée de manière connue par un boîtier et un couvercle en matière plastique transparente, et dans laquelle le boîtier est compartimenté de manière à former:
- un réceptacle pour l'échantillon liquide communiquant avec une ouverture du couvercle fermée par un bouchon;
- un réservoir destiné à contenir un liquide diluant;
- une cuve mélangeuse,
- une série de cuves de réaction alignées parallèlement le long d'une paroi latérale longitudinale du boîtier, susceptibles de contenir respectivement des réactifs solides reliés par des conduits capillaires à une conduite commune, communiquant par un conduit capillaire avec ladite cuve mélangeuse et faisant office de conduites de trop-plein aboutissant dans une cuve commune de trop-plein.

La barrette de conditionnement selon l'invention se caractérise:
- d'une part, en ce que le réceptacle est relié par un conduit capillaire à une cellule calibrée, elle-même reliée à une chambre de trop-plein;
- le réservoir de diluant est situé au dessous de ladite cellule calibrée et communique par un orifice avec la face du boîtier fermé par le couvercle;
- la cuve mélangeuse est située à une extrémité de la barrette et communique par des conduits capillaires respectivement avec la cellule calibrée et le réservoir de diluant, et tous les tubes capillaires précités sont parallèles aux parois latérales longitudinales de la barrette.

Selon un mode de réalisation préférentiel, le boîtier de la barrette est formé d'une pièce unitaire venue de moulage et d'un fond. La pièce unitaire définit avec le couvercle le réceptacle d'échantillon, la cellule calibrée et sa chambre de trop-plein, la cuve mélangeuse, les cuves de réaction et l'ensemble des conduits capillaires. La barrette présente dans sa partie inférieure une cavité définissant avec le fond le réservoir de diluant. Les cuves de réaction contiennent respectivement des réactifs sous forme de tablettes ou des réactifs lyophilisés et le réservoir de diluant contient une dose de diluant.

L'invention concerne également un dispositif pour la mise en oeuvre du procédé décrit précédemment au moyen de la barrette caractéristique. Ce dispositif, qui comporte une console formée d'une table-support et d'un couvercle transparent, dans laquelle la table support est muni:
- d'un plateau central avec des moyens pour le faire tourner autour d'un axe vertical;
- d'un portique surmontant l'ensemble comportant un photomètre présentant plusieurs têtes de lecture situées au dessus des cuves de réaction d'une barrette;
- une unité centrale de commande de tous les moyens précités.

Ce dispositif se caractérise:
- d'une part, en ce que le plateau central présente une rainure diamétrale dont la largeur est légèrement supérieure à celle d'une barrette de conditionnement, et dont le rayon est légèrement supérieur à la longueur d'une telle barrette;
- d'autre part, en ce que le plateau central présente une couronne périphérique coplanaire et coaxiale avec des moyens pour la faire tourner lentement indépendamment du plateau central, ladite couronne présentant une pluralité de logements radiaux pour les barrettes de conditionnement;
- et en ce que le portique surmonte la couronne périphérique et comporte des moyens mécaniques pour faire passer par translation une barrette de conditionnement d'un logement radial de la couronne à la rainure du plateau tournant et inversement.

D'autres caractéristiques et avantages de la présente invention apparaîtront au cours de la description suivante des modes de réalisation donnés à titre indicatif.

Dans les dessins annexés:
la figure 1 est une vue schématique en élévation et partiellement coupée d'un dispositif pour la mise en oeuvre du procédé selon l'invention,
la figure 2 est un vue en perspective éclatée, côté couvercle, d'une barrette de conditionnement utilisée dans le procédé selon l'invention,
la figure 3 est une vue en perspective éclatée côté fond de la barrette de la figure 2,
la figure 4 est une vue en perspective de la barrette des figures 2 et 3,
la figure 5 est une vue en coupe selon la ligne V-V de la figure 4,
la figure 6 est une coupe selon la ligne VI-VI de la figure 5,
la figure 7 est une coupe selon la ligne VII-VII de la figure 5,
les figures 8 à 11, sont des coupes transversales schématiques du dispositif de la figure 1 contenant, dans des positions diverses, une barrette selon l'invention,
les figures 12 à 17 sont des vues schématiques de dessus du dispositif de la figure 1 pendant différentes phases du procédé selon l'invention,
les figures 18 et 19 sont respectivement des vues analogues à celles des figures 6 et 7 et correspondent à la phase du procédé illustrée par la figure 14,
les figures 20 et 21 sont respectivement des vues analogues à celles des figures 18 et 19 et correspondent à la phase du procédé illustrée par la figure 15,
les figures 22, 23, 24, 25 sont des vues analogues à celles de la figure 21, et montrent l'évolution du mélange qui se réalise lors de la phase du procédé illustrée par la figure 15,
les figures 26 et 27 sont respectivement des vues analogues à celle de la figure 20, et correspondent à la phase du procédé illustrée par la figure 16.

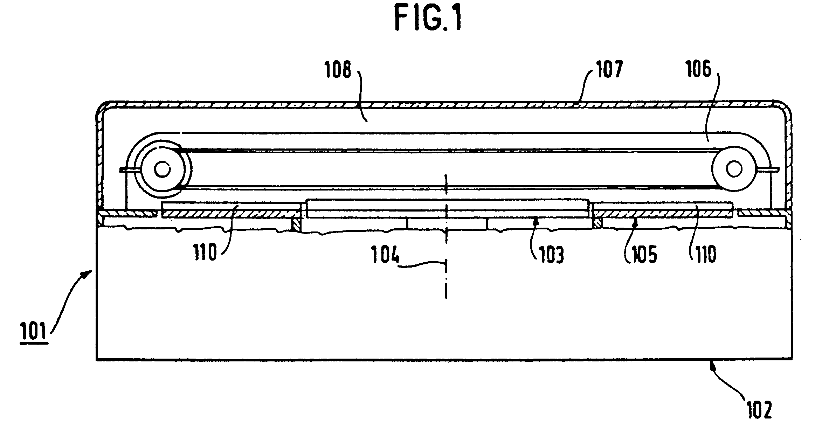

La figure 1 montre très schématiquement en élévation semi-coupée, un dispositif permettant la mise en oeuvre du procédé selon l'invention. Il s'agit d'une console 101 comportant une table-support 102 pour un plateau tournant 103 autour d'un axe 104 et une couronne 105 sensiblement coplanaire susceptible d'un mouvement de rotation autour de l'axe 104. Au-dessus de cet ensemble est solidarisé un portique 106 supportant des moyens mécaniques et des moyens optiques qui vont être explicités plus loin.

La partie supérieure de la table-support 102 est recouverte d'un couvercle transparent 107 qui définit une enceinte 108 où les conditions de température peuvent être éventuellement prédéterminées et maintenues fixes.

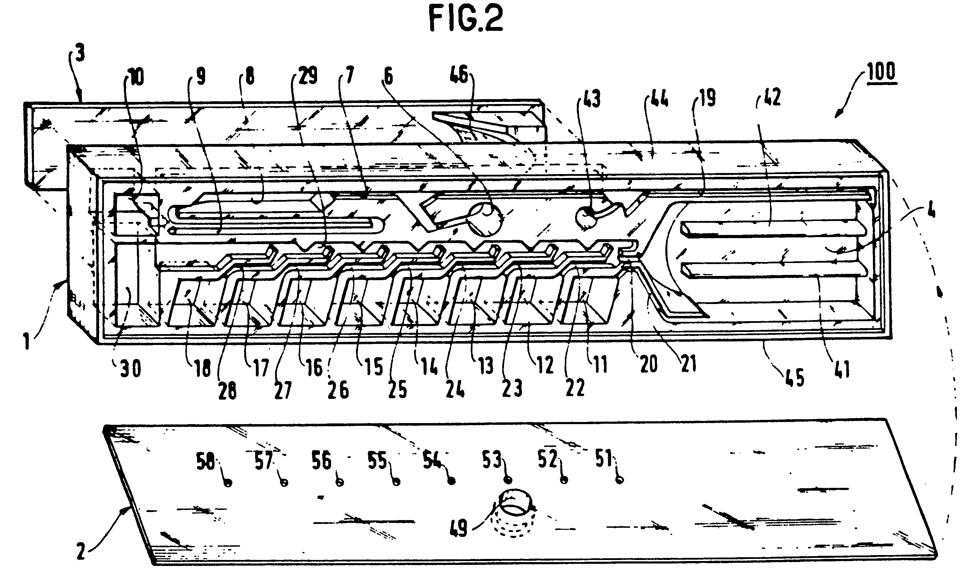

Le dispositif de la figure 1 est destiné à recevoir une pluralité de barrettes de conditionnement 100 telles que celle qui apparaît dans les figures 2, 3 et 4.

Une barrette 100 en matière plastique transparente comporte un boîtier 1 parallélépipédique fermé d'une part par un couvercle 2 et d'autre part par un fond 3. A titre d'exemple, la longueur de la barrette est de l'ordre de 5 centimètres, sa largeur et sa hauteur sont de l'ordre de 1 centimètre.

Du côté de sa paroi longitudinale 44, le boîtier 1 comporte un réceptacle 6 pour un échantillon liquide communiquant avec une ouverture 49 du couvercle 2. Ce réceptacle est relié par un conduit capillaire 7 à une cellule calibrée 8, elle-même reliée par un conduit capillaire 9 à une chambre de trop-plein 10, et par un conduit capillaire 19 à une cuve mélangeuse 4. Les conduits capillaires 7, 9 et 19 sont parallèles entre eux et à la paroi 44 du boîtier. Ils sont situés en surface de ce boîtier et sont définis en partie par la face interne du couvercle 2.

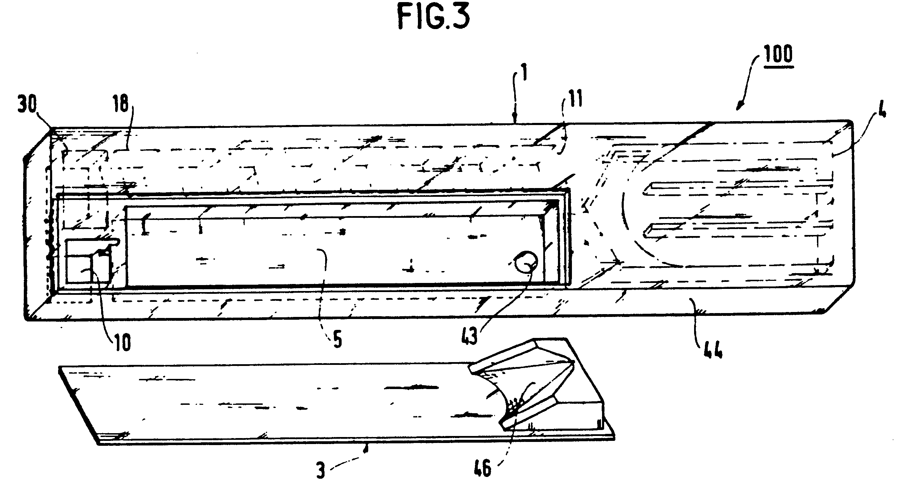

Sous les conduits capillaires 7 et 9 et la cellule calibrée 8 se trouve un réservoir de diluant 5 qui est vu clairement en perspective dans la figure 3. C'est le fond 3 et sa paroi profilée 46 qui, en fermant le boîtier 1, définissent ce réservoir qui est muni d'un orifice d'entrée 43 visible dans les figures 2 et 3. Le conduit capillaire 19 aboutissant dans la cuve mélangeuse 4 débouche dans l'orifice 43. La cuve mélangeuse 4 située à l'autre extrémité de la barrette 100 par rapport à la cellule calibrée 8 est munie d'un système de cloisonnement partiel formé de deux nervures 41 et 42 dont la fonction de brassage de liquide apparaîtra plus loin.

La cuve mélangeuse 4 communique par ailleurs avec une série de cuves de réaction 11 à 18 alignées le long de la paroi 45 de la barrette 100. La cuve de réaction 11 communique avec la cuve mélangeuse 4 par un conduit capillaire 21, tandis que les autres cuves sont alimentées par le conduit capillaire 20 et des conduits capillaires individuels 22 à 28. Elles communiquent par ailleurs entre elles au niveau d'une conduite commune de trop-plein 29 aboutissant dans une cuve commune de trop-plein 30.

Des évents 51 à 58 sont prévus dans le couvercle 2 respectivement en regard des cuves de réaction 11 à 18.

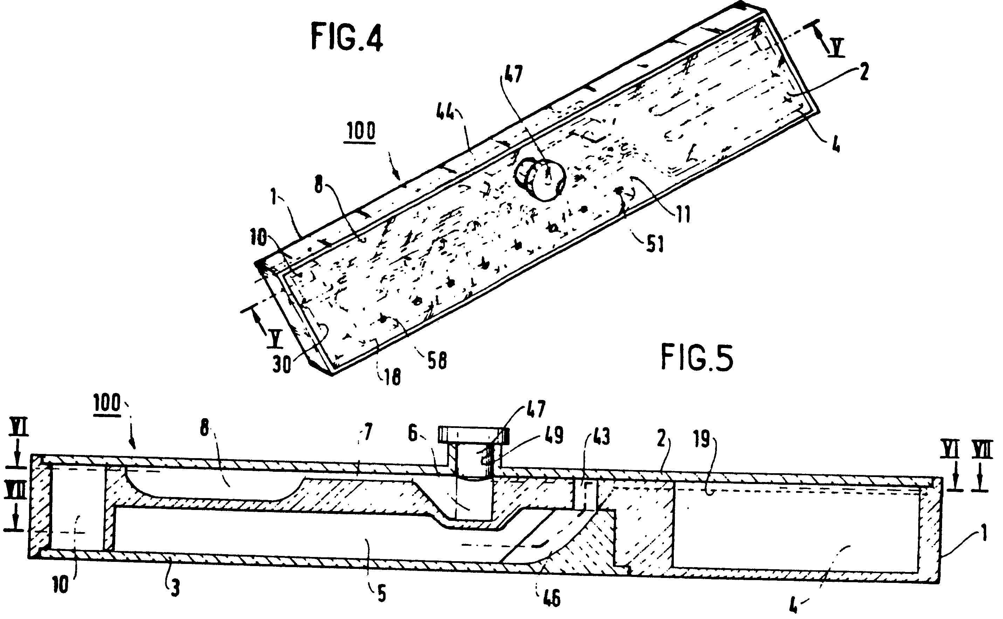

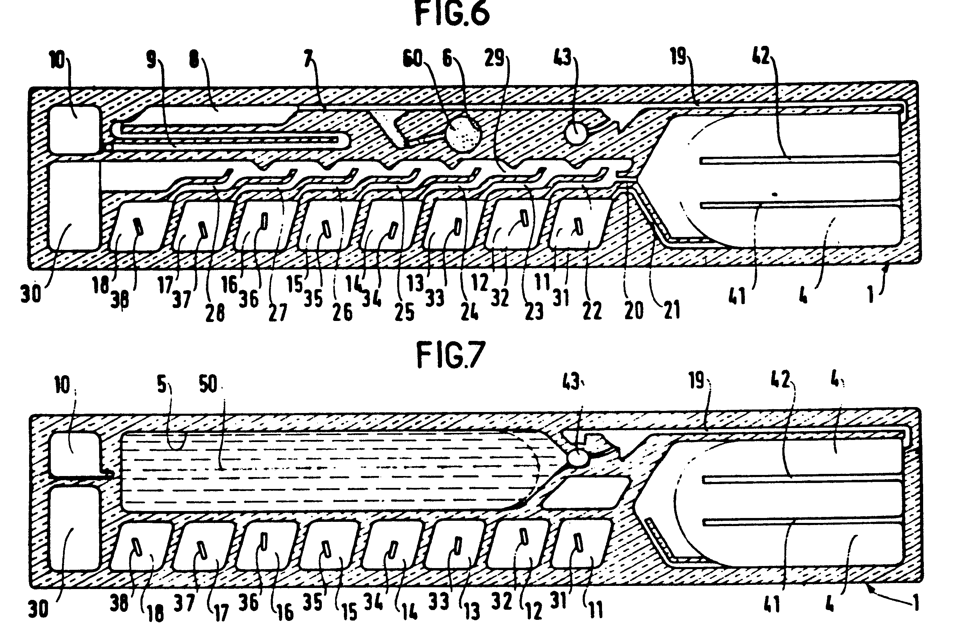

Les figures 4 et 5 montrent clairement l'agencement de la cellule calibrée 8, de son trop-plein 10, du réservoir de diluant 5 et de la cuve mélangeuse 4. On a référencé 47 le bouchon de fermeture de l'orifice 49.

Dans la pratique, les barrettes 100 sont commercialisées prêtes à l'emploi. Autrement dit, comme le montrent les figures 6 et 7 les cuves de réaction 11 à 18 ont été respectivement garnies de réactifs secs 31 à 38 et la cuve de diluant 5 a été remplie de diluant 50.

Le bouchon 47 obture l'orifice 49; on l'ôte au moment de l'utilisation pour introduire une dose d'échantillon liquide 60 à analyser (voir figure 6).

Pour des raisons qui seront explicitées plus loin, une barrette 100 subit différents mouvements sur le plateau tournant 103 ou sur la couronne 105 de la console de la figure 1.

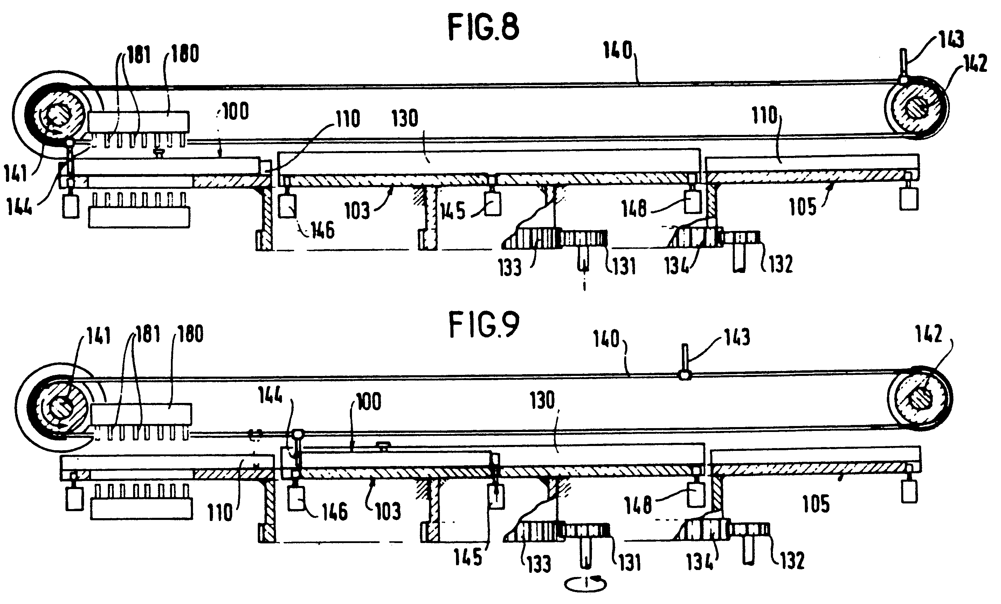

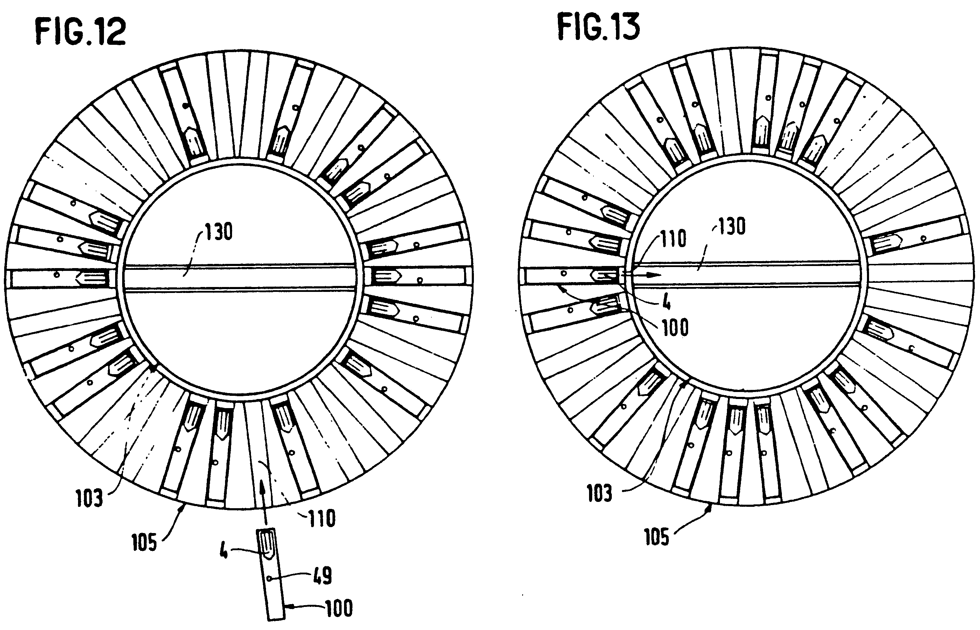

Les quatre positions essentielles de la barrette 100 apparaissent dans les figures 8 à 11 où le dispositif est vu schématiquement en coupe, et dans les figures 12 à 17 où il est vu partiellement de dessus.

La couronne 105 présente une pluralité de logements radiaux 110 pour les barrettes 100. A titre d'exemple, son diamètre extérieur est de l'ordre de 25 cm, et le nombre de logements est de l'ordre de trente. Un entraînement schématiquement représenté par deux engrenages 132, 134 permet la rotation de la couronne 105 autour de l'axe de symétrie 104, en un mouvement lent continu, par exemple de 15 tours par minutes.

Le plateau central 103, de diamètre 12 cm environ, peut être entraîné en rotation rapide autour de son axe 104 par un dispositif schématiquement illustré par des engrenages 131, 133. Il comporte en outre une rainure diamétrale 130 susceptible de loger une barrette 100, et des taquets 145, 146 et 148 susceptibles d'immobiliser cette barrette suivant la première ou la seconde moitié de la rainure 130.

Le passage d'une barrette 100 d'un logement 110 de la couronne 105 à la rainure 130 du plateau 103 est réalisé par l'intermédiaire d'un système mécanique à chaîne 140, entraînée par des axes 141 et 142, et munie de doigts 144, 143; ce système mécanique est solidarisé au portique 106 de la console 101.

Le portique 106 de la console 101 comporte en outre au moins un dispositif optique tel qu'un photomètre 180 muni de n têtes de lectures 181 (huit par exemple), situées au-dessus de la couronne 105 de manière à se trouver au-dessus des huit cuves de réactions 11 à 18 de la barrette 100.

L'ensemble des dispositifs mécaniques, optiques, électroniques est actionné par une unité de commande centrale non illustrée.

On va maintenant expliciter en détail les différentes phases du procédé selon l'invention.

Une barrette de conditionnement 100 munie de son échantillon 60 à analyser est dans l'état illustré par les figures 6 et 7. On l'introduit dans un logement radial 110 de la couronne 105 (voir figure 12) de manière que sa cuve mélangeuse 4 soit située du côté du centre de rotation de l'ensemble. La couronne 105 tourne lentement et le logement 110 contenant la barrette 100 arrive au niveau de la rainure diamétrale 130 du plateau tournant 103 (voir figures 13 et 8).

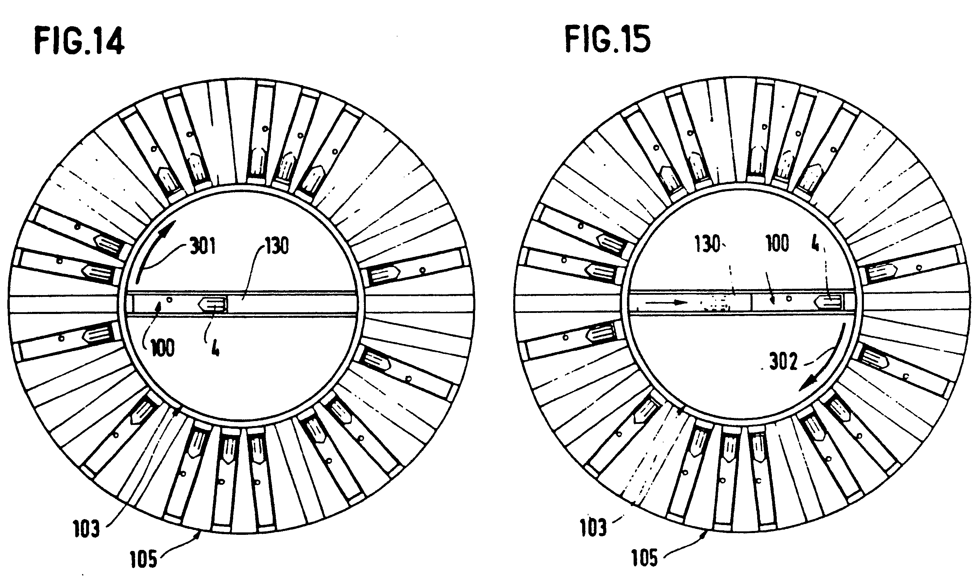

La barrette 100 est entraînée par le doigt 144 de la chaîne 140 dans la rainure 130 et sa course est bloquée par le taquet 145 (voir figures 9 et 14). La barrette 100 subit alors une première centrifugation schématisée par la flèche 301 de la figure 14.

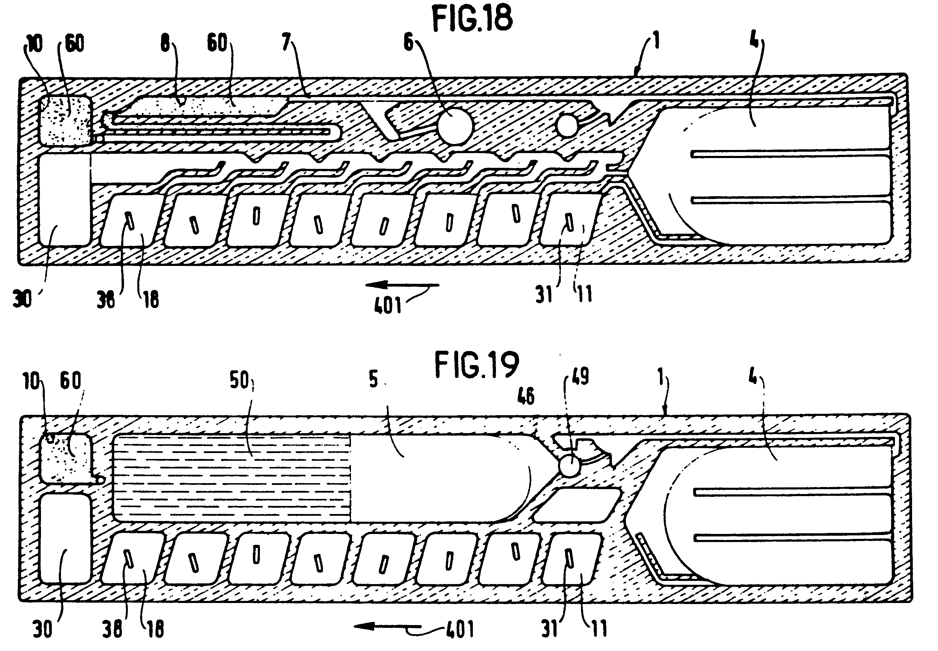

La répartition des liquides dans la barrette 100 au cours de cette première centrifugation apparaît dans les figures 18 et 19, la flèche 401 montrant la direction de la force centrifuge correspondante. L'échantillon 60 représenté en pointillés est passé du réceptacle 6 par le capillaire 7 dans la cellule calibrée 8 et la chambre de trop-plein 10. Le diluant 50 illustré par des tirets est maintenu dans son réservoir 5.

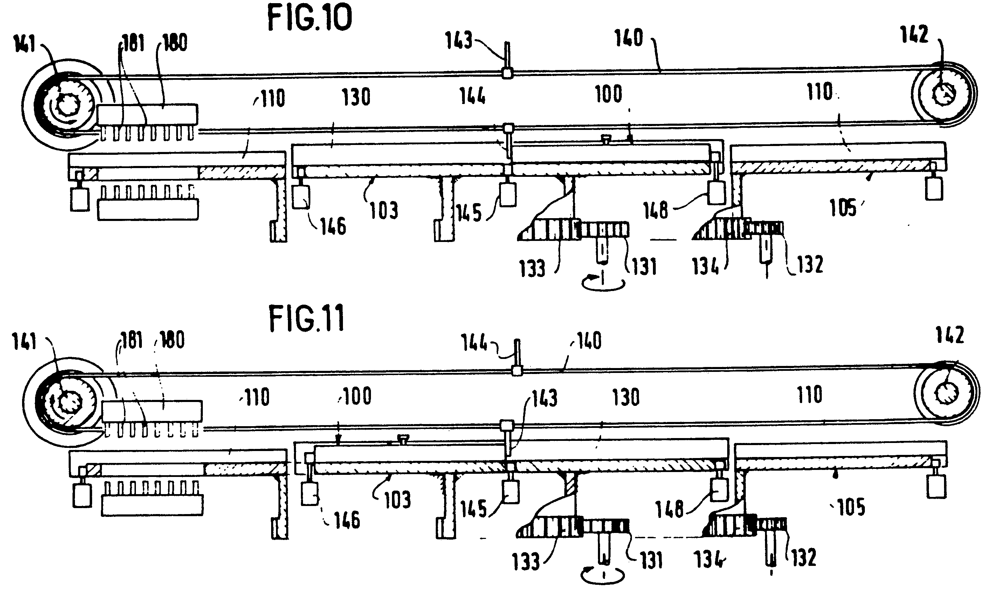

Après la première centrifugation, le taquet 145 s'efface et la barrette 100 est entraînée par le doigt 144 dans la deuxième partie de la rainure diamétrale 130 où elle est bloquée par le taquet 148 (voir figures 10 et 15). La barrette 100 subit alors sa seconde centrifugation schématisée par la flèche 302.

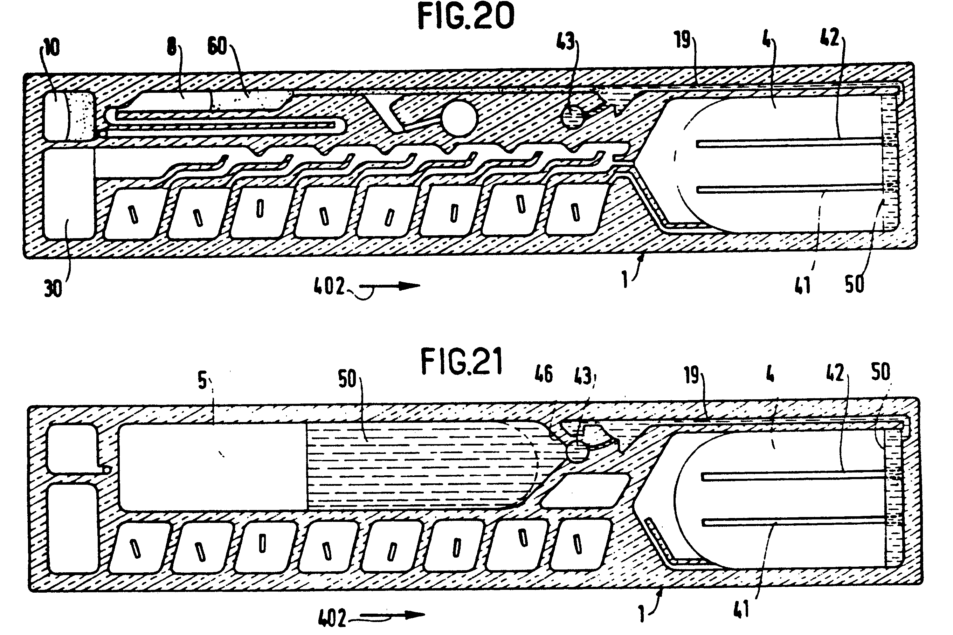

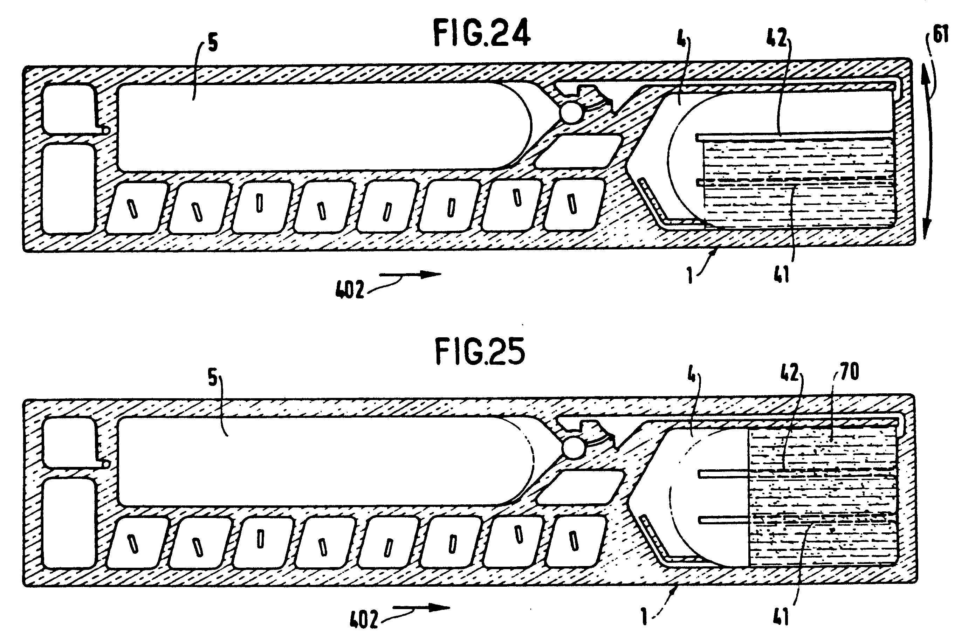

Les figures 20 à 25 montrent l'effet de la force centrifuge schématisée par la flèche 402 sur la répartition des liquides dans la barrette 100. L'échantillon 60 est chassé dans le conduit capillaire 19 vers la cuve mélangeuse 4, tandis que le diluant 50 est également chassé par l'orifice 43, le conduit capillaire 19 vers la cuve mélangeuse 4.

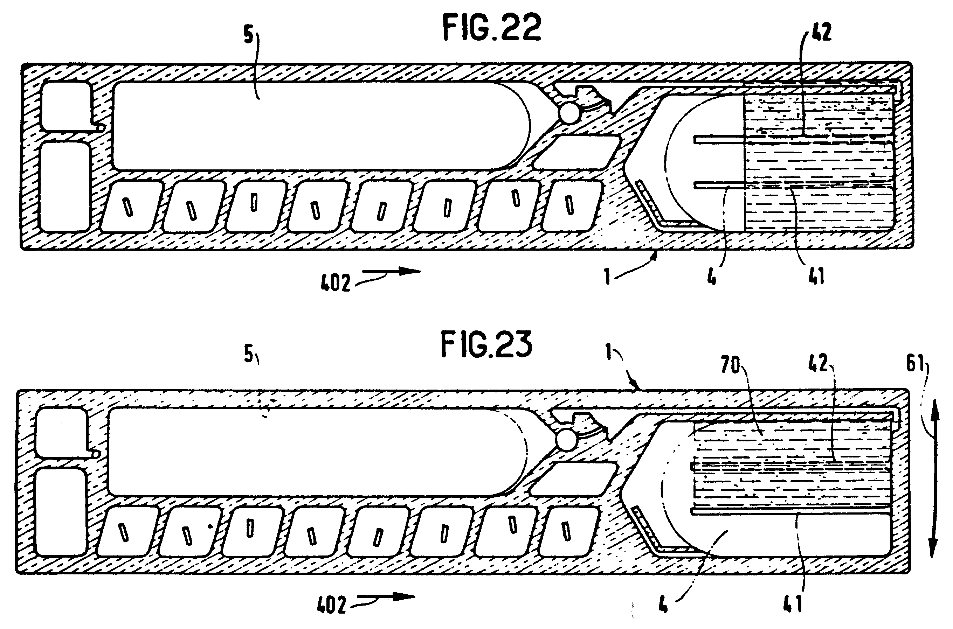

Dans les figures 22 à 25, les deux liquides se trouvent dans la cuve 4 et sont brassés grâce à la présence des nervures de cloisonnement 41 et 42. Ce brassage est schématisé par les flèches 61. On a représenté l'évolution du mélange 70 en intégrant petit à petit les pointillés (échantillon 60) dans les tirets (diluant 50).

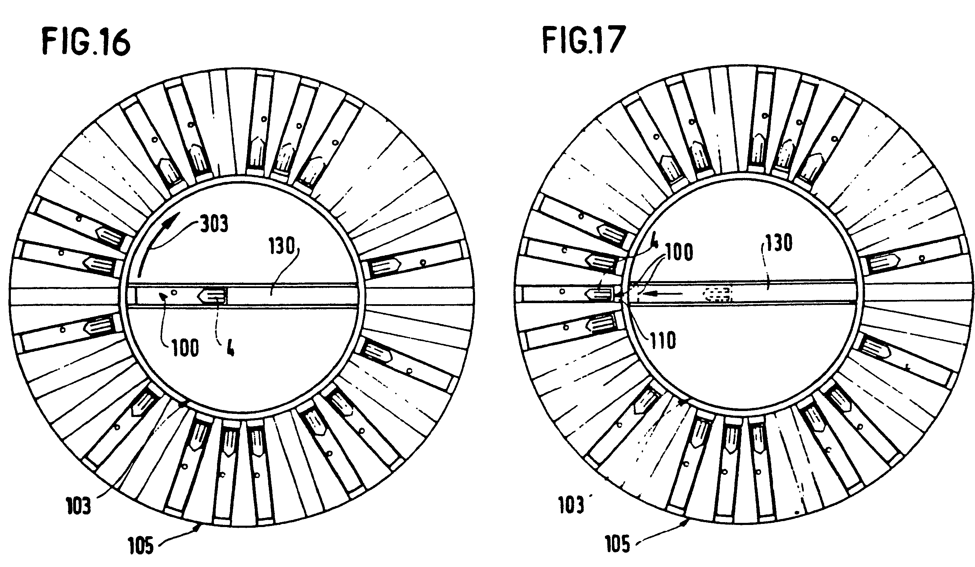

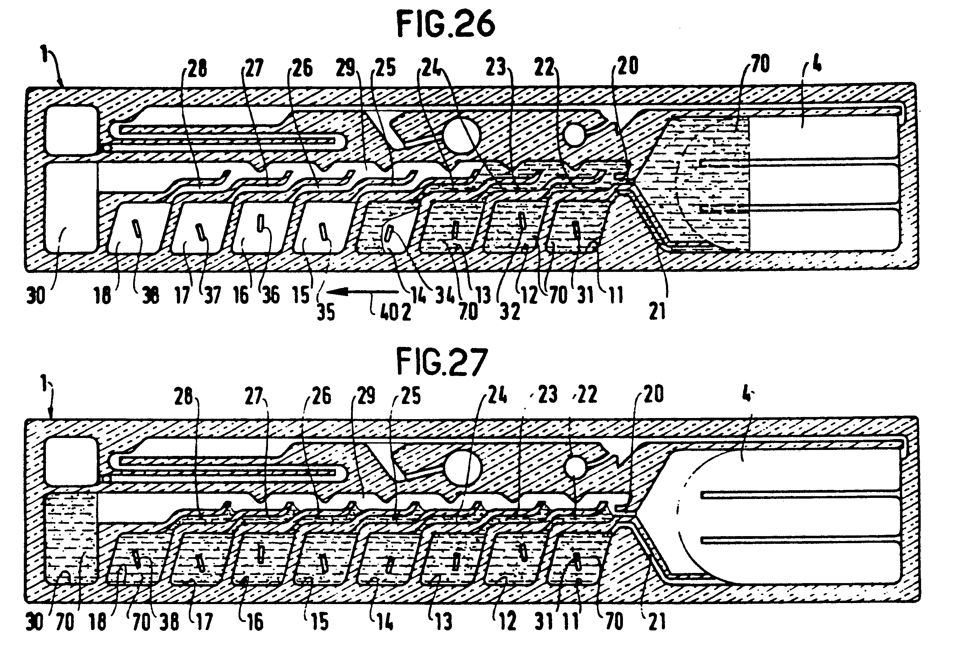

Une fois le mélange 70 réalisé, la barrette 100 repasse, grâce au mouvement du doigt 143, dans la première position qu'elle avait dans la rainure 130 du plateau 103 (voir figures 11 et 16); elle se trouve bloquée par le taquet 146. Elle subit alors une troisième centrifugation schématisée par la flèche 303. La répartition de liquide qui en résulte apparaît dans les figures 26 et 27, la force centrifuge étant schématisée par la flèche 403. Le liquide 70 est chassé par la cuve mélangeuse 4 par le conduit capillaire 21 vers la cuve 11, et par le conduit capillaire 20 vers les autres cuves 12 à 18 par l'intermédiaire des conduits capillaires 22 à 28 et de la conduite de trop-plein 29.

L'état final au repos de la barrette 100 est montré dans la figure 27 où l'on voit les cuves de réactions 11 à 18 et les capillaires associés 22 à 28 remplis de liquide 70, ainsi que la cuve de trop-plein 30. Les réactions avec les réactifs 31 à 39 peuvent alors avoir lieu. Comme l'indique la figure 17, la barrette 100 peut revenir dans son logement 110 de la couronne 105. Au cours de la rotation de cette couronne, les huit cuves de réaction passeront sous huit têtes de lecture 181 du photomètre 180 (voir figure 8).

Ces mesures simultanés seront transmises à l'unité de commande qui interprète les résultats et déclenche leur impression sur imprimante lorsque les réactions sont terminées.

Le procédé selon l'invention est donc d'une utilisation très simple et peut être utilisé par le praticien lui-même dans son cabinet. Différentes barrettes contenant différents réactifs sont à la disposition du praticien. Des barrettes-témoins peuvent être également préparées prêtes à l'emploi.

Bien entendu l'invention n'est pas limitée au mode de réalisation qui vient d'être décrit. On pourra sans sortir du cadre de l'invention remplacer tout moyen par un moyen équivalent.

**Revendications**

1. Procédé pour la réalisation d'analyses médicales d'un échantillon liquide à l'aide de réactifs secs (31, 38) du type dans lequel on utilise:
- d'une part, des barrettes longitudinales (100) de conditionnement en matière plastique transparente, comportant un boîtier (1) fermé par un couvercle (2), ledit boîtier (1) étant compartimenté de manière à former:
- un réceptacle pour ledit échantillon liquide communiquant avec une ouverture (49) dudit couvercle (2) fermée par un bouchon (47),
- un réservoir (5) destiné à contenir un liquide diluant (50),
- une cuve mélangeuse (4),
- une série de cuves de réaction alignées (11, 18) parallèlement le long d'une des parois latérales (45) longitudinales de la barrette, susceptibles de contenir respectivement des réactifs solides (31, 38), reliées par des conduits capillaires (22, 28) à une conduite commune (29) communiquant par un conduit capillaire avec la cuve mélangeuse (4) et faisant office de conduite de trop-plein aboutissant à une cuve commune de trop-plein (30);
- et d'autre part, une console d'analyse (101) comportant un plateau central (103) tournant et un portique diamétral (106) surplombant l'ensemble tournant et supportant des moyens optiques d'analyse, tels qu'un photomètre, caractérisé:
- d'une part, en ce qu'on utilise la barrette (100) dont:
- le réceptacle (6) est relié par un conduit capillaire (7) à une cellule calibrée (8), elle-même reliée à une chambre de trop-plein (10);
- le réservoir (5) de diluant est situé au dessous de la dite cellule calibrée (8) et communique par un orifice (43) avec la face du boîtier (1) fermée par le couvercle (2);
- la cuve mélangeuse (4) est située à une extrémité de la barrette (100) et communique par des conduits capillaires (7, 19) respectivement avec ladite cellule calibrée (8) et ledit réservoir (5) de diluant (50), tous les tubes capillaires (7, 19) étant parallèles aux parois latérales (44, 45) longitudinales de la barrette (100);
- d'autre part, en ce qu'on utilise le plateau central (103) rotatif de la console présentant une rainure diamétrale (130) dont la longueur est au moins égale à celle de deux barrettes de conditionnement alignées (100), et dont la largeur est au moins égale à celle d'une telle barrette, ledit plateau (103) présentant en outre une couronne périphérique (105) coplanaire et coaxiale comportant des logements radiaux (110) pour une pluralité de barrettes de conditionnement (100) et susceptibles d'être animées d'un mouvement de rotation;
- et enfin en ce que:
- après avoir introduit un échantillon (60) à analyser dans ledit réceptacle (6), on place la barrette (100) dans un logement radial (100) de la couronne périphérique (105), de manière à ce que la cuve mélangeuse (4) soit la partie de la barrette (100) la plus proche du centre du plateau central (103), puis on translate cette barrette (100) dans un rayon de ladite rainure diamétrale (130), de manière à ce que la cuve mélangeuse (4) se trouve au voisinage du centre du plateau central (130);
- on réalise une première centrifugation, ce qui a pour effet de remplir d'échantillon la cellule calibrée (8);
- puis, on translate la barrette dans la rainure diamétrale (130), de manière à ce que la cuve mélangeuse (4) se trouve au voisinage de la périphérie du plateau central (103);

- on réalise une seconde centrifugation, ce qui a pour effet de remplir la cuve mélangeuse (4) en échantillon et en diluant (50) et d'y réaliser le mélange;
- on translate la barrette (100) dans la rainure diamétrale (130) dans la même position que pour la première centrifugation;
- puis, on réalise une troisième centrifugation ayant pour effet de remplir les cuves de réaction (11, 18) et la cuve de trop-plein (30) à partir de la cuve mélangeuse (4);
- enfin, on remet la barrette (100) en place dans le logement radial (110) de la couronne périphérique (105), et on lit les réactions dans les diverses cuves au moyen du photomètre, et on transmet les résultats des mesures photomètriques à un ordinateur programmé.

2. Barrette (100) de conditionnement pour la mise en oeuvre du procédé selon la revendication 1, constituée de manière connue par un boîtier (1) et un couvercle (2) en matière plastique transparente, et dans laquelle le boîtier (1) est compartimenté de manière à former:
- un réceptacle (6) pour l'échantillon liquide (60) communiquant avec une ouverture (49) du couvercle (2) fermée par un bouchon (47);
- un réservoir (5) destiné à contenir un liquide diluant (50);
- une cuve mélangeuse (4);
- une série de cuves de réaction (11, 18) alignées parallèlement le long d'une paroi latérale (45) longitudinale du boîtier (1), susceptibles de contenir respectivement des réactifs solides (31, 38) reliés par des conduits capillaires (22, 28) à une conduite commune (29), communiquant par un conduit capillaire avec ladite cuve mélangeuse (4) et faisant office de conduites de trop-plein aboutissant dans une cuve commune de trop-plein (30), caractérisée:
- d'une part, en ce que le réceptacle (6) est relié par un conduit capillaire (7) à une cellule calibrée (8), elle-même reliée à une chambre de trop-plein (10);
- le réservoir (5) de diluant (50) est situé au dessous la dite cellule calibrée (8) et communique par un orifice (43) avec la face du boîtier fermé par le couvercle (2);
- la cuve mélangeuse (4) est située à une extrémité de la barrette (100) et communique par des conduits capillaires (19, 7) respectivement avec la cellule calibrée (8) et le réservoir de diluant (50), et tous les tubes capillaires précités sont parallèles aux parois latérales (44, 45) longitudinales de la barrette (100).

3. Barrette (100) de conditionnement selon la revendication 2, caractérisé en ce que le boîtier (1) de ladite barrette (100) est formé d'une pièce unitaire venue de moulage et d'un fond (3), ladite pièce unitaire définit avec le couvercle (2) le réceptacle (6) d'échantillon, la cellule calibrée (8) et sa chambre de trop-plein (10), la cuve mélangeuse (4), les cuves de réaction (11, 18) et l'ensemble des conduits capillaires (7, 19, 22, 28), et qu'elle présente dans sa partie inférieure une cavité définissant avec le fond le réservoir (5) de diluant (50).

4. Barrette (100) de conditionnemen selon l'un des revendications 2 et 3, caractérisée par le fait que lesdites cuves (11, 18) de réaction contiennent respectivement des réactifs (31, 38) sous forme de tablettes ou des réactifs lyophilisés, et que ledit réservoir (5) de diluant (50) contient une dose de diluant (50).

5. Dispositif pour la mise en oeuvre du procédé selon la revendication 1 au moyen de la barrette selon l'une des revendications 2 à 4, comportant une console (102) formée d'une table-support (102) et d'un couvercle transparent (107), dans laquelle la table support (102) est munie:
- d'un plateau central (103) avec des moyens pour le faire tourner autour d'un axe vertical (104);
- d'un portique (106) surmontant l'ensemble comportant un photomètre présentant plusieurs têtes de lecture situées au dessus des cuves de réaction d'une barrette (100);
- une unité centrale de commande de tous les moyens précités, caractérisé:
- d'une part, en ce que le plateau central (103) présente une rainure diamétrale (130) dont la largeur est légèrement supérieure à celle d'une barrette de conditionnement (100), et dont le rayon est légèrement supérieur à la longueur d'une telle barrette (100);
- d'autre part, en ce que le plateau central (103) présente une couronne (105) périphérique coplanaire et coaxiale avec des moyens pour la faire tourner lentement indépendamment du plateau central (103), ladite couronne (105) présentant une pluralité de logements radiaux (110) pour les barrettes de conditionnement (100);
- et en ce que le portique (106) surmonte la couronne (105) périphérique et comporte des moyens mécaniques (132, 134, 140, 148) pour faire passer par translation une barrette de conditionnement (100) d'un logement radial (110) de la couronne (105) à la rainure du plateau tournant (103) et inversement.

## Patentansprüche

1. Verfahren zum Durchführen von medizinischen Analysen einer flüssigen Probe mit Hilfe von Trockenreagenzien (31, 38), bei dem folgendes verwendet wird:
- zum einen, langgestreckte Konditionierstäbe (100) aus transparentem Kunststoffmaterial, die ein durch einen Deckel (2) verschlossenes Gehäuse (1) aufweisen, wobei das Gehäuse (1) derart unterteilt ist, daß folgendes gebildet wird:
- ein Sammelbehälter für die flüssige Probe, der mit einer Öffnung (49) des Deckels (2), die durch einen Stopfen (47) verschlossen ist, in Verbindung steht,
- ein Vorratsbehälter (5), der dazu vorgesehen ist, ein flüssiges Verdünnungsmittel (50) aufzunehmen,
- ein Mischbehälter (4),
- eine Reihe an Reaktionsbehältern (11, 18), die parallel entlang einer der längsverlaufenden Seitenwänden (45) des Stabes ausgerichtet sind, die dazu vorgesehen sind, jeweils feste Reagenzien (31, 38) aufzunehmen, die ferner über Kapillarleitungen (22, 28) mit einer Sammelleitung (29) verbunden sind, die wiederum über eine Kapillarleitung mit dem Mischbehälter (4) verbunden ist und die als Überlaufleitung dient, die zu einem gemeinsamen Überlaufbehälter (30) führt; und

- zum anderen, eine Analysenkonsole (101), die eine mittige Drehplatte (103) und einen diametralen Portalrahmen (106) enthält, der den drehbaren Zusammenbau überragt und der optische Analysemittel, wie ein Photometer trägt, dadurch gekennzeichnet,

- daß einerseits ein Stab (100) verwendet wird, bei dem:

- der Sammelbehälter (6) über eine Kapillarleitung (7) mit einer kalibrierten Zelle (8) verbunden ist, die wiederum mit einer Überlaufkammer (10) verbunden ist;

- der Vorratsbehälter (5) für das Verdünnungsmittel unterhalb der kalibrierten Zelle (8) angeordnet ist und über eine Öffnung (43) mit der Seite des Gehäuses (1) verbunden ist, die durch den Deckel (2) verschlossen ist;

- der Mischbehälter (4) an einem äußeren Ende des Stabes (100) angeordnet ist und über Kapillarleitungen (7, 19) mit der kalibrierten Zelle (8) bzw. dem Vorratsbehälter (5) für das Verdünnungsmittel (50) in Verbindung steht, wobei alle Kapillarleitungen (7, 19) parallel zu den längsverlaufenden Seitenwänden (44, 45) des Stabes (100) sind;

- daß zum anderen eine mittige Drehplatte (103) der Konsole verwendet wird, die eine diametrale Rille (130) aufweist, deren Länge zumindest gleich der Länge von zwei aneinandergereihten Konditionierstäben (100) ist, und deren Breite zumindest gleich der Breite eines solchen Stabes ist, wobei die Platte (103) darüberhinaus einen koplanaren und koaxialen umfänglichen Kranz (105) aufweist, der radiale Aufnahmen (110) für eine Vielzahl an Konditionierstäben (100) enthält und der in eine Drehbewegung angetrieben werden kann;

- und schließlich daß,

- nachdem eine zu analysierende Probe (60) in den Sammelbehälter (6) eingebracht wurde, der Stab (100) derart in eine radiale Aufnahme (110) des umfänglichen Kranzes (105) gebracht wird, daß der Mischbehälter (4) der Teil des Stabes (100) wird, der am nächsten zum Mittelpunkt der mittigen Platte (103) liegt, daß man anschließend diesen Stab (100) derart in einen Radius der diametralen Rille (130) überbringt, daß sich der Mischbehälter (4) benachbart zum Mittelpunkt der mittigen Platte (130) befindet;

- daß eine erste Zentrifugation durchgeführt wird, die bewirkt, daß die Probe die kalibrierte Zelle (8) füllt;

- daß anschließend der Stab derart in der diametralen Rille (130) fortbewegt wird, daß sich der Mischbehälter (40) benachbart zum äußeren Umfangsrand der mittigen Platte (103) befindet;

- daß eine zweite Zentrifugation durchgeführt wird, die bewirkt, daß der Mischbehälter (4) mit der Probe und dem Verdünnungsmittel (50) gefüllt wird und daß dort die Mischung gebildet wird;

- daß der Stab (100) in der diametralen Rille (130) in dieselbe Position wie für die erste Zentrifugation verschoben wird;

- daß anschließend eine dritte Zentrifugation durchgeführt wird, die bewirkt, daß, von dem Mischbehälter (4) ausgehend, die Reaktionsbehälter (11, 18) und der Überlaufbehälter (30) gefüllt werden;

- daß schließlich der Stab (100) in die radiale Aufnehmung (110) des umfänglichen Kranzes (105) zurückgebracht wird, und daß die Reaktionen in den verschiedenen Behältern mittels Photometer erfaßt werden, und daß man die photometrischen Meßergebnisse einem vorprogrammierten Computer übermittelt.

2. Konditionierstab (100) zum Durchführen des Verfahrens nach Anspruch 1, der in an sich bekannter Weise aus einem Gehäuse (1) und einem Deckel (2) aus transparentem Kunststoffmaterial besteht und bei dem das Gehäuse (1) derart unterteilt ist, daß folgendes gebildet wird:

- ein Sammelbehälter (6) für die flüssige Probe (60), der mit einer durch einen Stopfen (47) verschlossenen Öffnung (49) des Deckels (2) in Verbindung steht;

- ein Vorratsbehälter (5), der dazu bestimmt ist, ein flüssiges Verdünnungsmittel (50) aufzunehmen;

- ein Mischbehälter (4);

- eine Reihe an parallel längs einer längsverlaufenden Seitenwand (45) des Gehäuses (1) ausgerichteten Reaktionsbehältern (11, 18), die dazu vorgesehen sind, jeweils feste Reagenzien (31, 38) aufzunehmen, wobei diese über Kapillarleitungen (22, 28) mit einer Sammelleitung (29) verbunden sind, die wiederum über eine Kapillarleitung mit dem Mischbehälter (4) in Verbindung steht und die als Überlaufleitung dient, die zu einem gemeinsamen Überlaufbehälter (30) führt, dadurch gekennzeichnet,

- daß einerseits der Sammelbehälter (6) über eine Kapillarleitung (7) mit einer kalibrierten Zelle (8) verbunden ist, die wiederum mit einer Überlaufkammer (10) verbunden ist;

- daß der Vorratsbehälter (5) für das Verdünnungsmittel (50) unterhalb der kalibrierten Zelle (8) angeordnet ist und über eine Öffnung (43) mit der Seite des Gehäuses in Verbindung steht, die durch den Deckel (2) verschlossen ist;

- daß der Mischbehälter (4) an einem äußeren Ende des Stabes (100) angeordnet ist und über Kapillarleitungen (19, 7) mit der kalibrierten Zelle (8) bzw. dem Vorratsbehälter für das Verdünnungsmittel (50) in Verbindung steht und daß alle der zuvor genannten Kapillarleitungen parallel zu den längsverlaufenden Seitenwänden (44, 45) des Stabes (100) sind.

3. Konditionierstab (100) nach Anspruch 2, dadurch gekennzeichnet, daß das Gehäuse (1) des Stabes (100) aus einem einheitlichen, durch Gießformen erhaltenen Stück und einem Boden (3) gebildet ist, wobei das einheitliche Stück mit dem Deckel (2) den Sammelbehälter (6) für die Probe, die kalibrierte Zelle (8) und deren Überlaufkammer (10), den Mischbehälter (4), die Reaktionsbehälter (11, 18) und den Zusammenbau der Kapillarleitungen (7, 19, 22, 28) bildet, und daß es an seiner Unterseite eine Ausnehmung aufweist, die mit dem Boden den Vorratsbehälter (5) für das Verdünnungsmittel (50) umgrenzen.

4. Konditionierstab (100) nach einem der Ansprüche 2 oder 3, dadurch gekennzeichnet, daß die Reaktionsbehälter (11, 18) jeweils Reagenzien (31, 38) in Form von Tabletten oder als gefriergetrocknete Reagenzien enthalten, und daß der Vorratsbehälter (5) für das Verdünnungsmittel (50) eine bestimmte Menge an Verdünnungsmittel (50) enthält.

5. Vorrichtung zum Durchführen des Verfahrens nach Anspruch 1 mittels dem Stab nach einem der Ansprüche 2 bis 4, mit einer Konsole (102), die ein Tischuntergestell (102) bildet, und mit einer transparenten Abdeckung (107), wobei das Tischuntergestell (102) wie folgt ausgestattet ist:
- mit einer mittigen Platte (103) mit Mitteln, um sie um eine vertikale Achse (104) drehen zu können;
- mit einem den Zusammenbau überragenden Portalrahmen, der ein Photometer aufweist, das mehrere Leseköpfe enthält, die oberhalb der Reaktionsbehälter eines Stabes (100) angeordnet sind;
- mit einer zentralen Steuereinheit für alle zuvor genannten Mittel, dadurch gekennzeichnet,
- daß einerseits die mittige Platte (103) eine diametrale Rille (130) aufweist, deren Breite etwas größer ist als die eines Konditionierstabes (100) und deren Radius etwas größer ist als die Länge eines Stabes (100);
- daß andererseits die mittige Platte (103) einen koplanaren und koaxialen umfänglichen Kranz (105) aufweist, der mit Mitteln versehen ist, um ihn langsam und unabhängig von der mittigen Platte (103) zu drehen, wobei der Kranz (105) eine Vielzahl an radialen Aufnahmen (110) für die Konditionierstäbe (100) enthält;
- und daß der Portalrahmen (106) den umfänglichen Kranz (105) übergreift und mechanische Mittel (132, 134, 140, 148) aufweist, um das Überführen eines Konditionierstabes (100) von einer radialen Aufnahme (110) des Kranzes (105) in die Rille der Drehplatte (103) und umgekehrt zu veranlassen.

## Claims

1. Method of performing medical analyses on a sample of liquid and using dry reagents (31-38), comprising the use:
- firstly of longitudinal conditioning strips (100) made of transparent plastic material and comprising a container (1) closed by a lid (2), said container (1) being compartmented in order to form:
- a receptacle for said liquid sample, said receptacle being in communication with an opening (49) through said lid (2), and said opening being closed by a stopper (47),
- a tank (5) for containing a diluent liquid (50),
- a mixing vat (4),
- a series of reaction vats (11-18) aligned along one (45) of said longitudinal side walls, and suitable for containing respective solid reagents (31-38), said reaction vats being connected via respective capillary ducts (22-28) to a common duct (29) in communication via a capillary duct with said mixing vat (4) and acting as an overflow duct terminating in a common overflow vat (30);
- and secondly of a cabinet (101) comprising a central turntable (103) and a diametrically extending gantry (106) over the rotary assembly supporting optical analyses means such as a photometer; characterized:
- firstly, in using the strip (100):
- of which the receptacle (6) is connected via a capillary duct (7) to a calibrated cell (8), which is in turn connected to an overflow chamber (10),
- of which the tank (5) containing the diluent is situated beneath said calibrated cell (8) and communicates via an orifice (43) with the face of the container (1) which is closed by the lid (2);
- and of which the mixing vat (4) is situated at one end of said strip (100) and communicates via respective capillary ducts (7, 19) with said calibrated cell (8) and said tank (5) of diluent (50), all of said abovementioned capillary ducts (7, 19) being parallel to the longitudinal side walls (44, 45) of the strip (100);
- secondly in using the central turntable (103) of the cabinet which presents a diametrically extending groove (130) which is at least twice as long as one said conditioning strip (100) and which is wide enough to receive such a strip, said table (103) further presenting a coplanar and coaxial peripheral ring (105) having radial housings (110) for receiving a plurality of conditioning strips (100) and suitable for being driven in rotation;
- and lastly in comprising the steps of:
- after inserting a sample (60) for analysis into said sample receptacle (6), placing said strip (100) in a radial housing (110) in said peripheral ring (105), the mixing vat being the closest part of the strip (100) to the center of the central turntable (103), then displacing said strip (100) along a radius of said diametrically extending groove (130), in order that the mixing vat (4) is close to the center of the central turntable (103),
- performing a first centrifuging operation having the effect of filling said calibrated cell (8) with said sample,
- shifting said strip in translation along said diametrically extending groove (130) so that said mixing vat (4) is located close to the periphery of the central turntable (103),
- performing a second centrifuging operation having the effect of filling said mixing vat (4) with said sample and said diluent (50), and of mixing said liquids,
- shifting the strip (100) in translation along said diametrically extending groove (130) into the same position as occupied for said first centrifuging operation,
- performing a third centrifuging operation having the effect of filling said reaction vats (11-18) and said overflow vat (30) from said mixing vat (4); and
- returning said strip (100) to a radial housing (110) in said peripheral ring (105), and observing the reactions in said reaction vats by means of said photometer, the results of the photometric measurements being transmitted to a programmed computer.

2. Conditioning strip (100) for performing the method according to claim 1, constituted in known manner by a container (1) and a lid (2) made of transparent plastic material, said container (1) being compartmented in order to form:
- a receptacle (6) for said liquid sample (60), said receptacle being in communication with an opening (49) through said lid (2), and said opening being closed by a stopper (47);
- a tank (5) for containing a diluent liquid (50),
- a mixing vat (4),
- a series of reaction vats (11-18) aligned along one (45) of said longitudinal side walls, and suitable for containing respective solid reagents (31-38), said reaction vats being connected via respective capillary ducts (22-28) to a common duct (29) in communication via a capillary duct with said mixing vat (4) and acting as an overflow duct terminating in a common overflow vat (30); characterized in that:

- firstly the receptacle (6) is connected via a capillary duct (7) to a calibrated cell (8), which is in turn connected to an overflow chamber (10);
- the tank (5) of diluent (50) is situated beneath said calibrated cell (8) and communicate via an orifice (43) with the face of said container which is closed by said lid (2);
- the mixing vat (4) is situated at one end of the strip (100) and communicates via respective capillary ducts (7, 19) with said calibrated cell (8) and with said tank (5) of diluent (50), all of said above-mentioned capillary ducts being parallel to the longitudinal side walls (44, 45) of said strip (100).

3. Conditioning strip (100) according to claim 2, characterized in that the container (1) is in the form of a one-piece molding together with a bottom (3), said one-piece molding defining, together with said lid (2), the sample receptacle (6), the calibrated cell (8) and its associated overflow chamber (10), the mixing vat (4), the reaction vats (11-18), and the set of capillary ducts (7, 19, 22-28), said strip presenting in the bottom of said container a cavity which, together with said bottom, defines said diluent (50) tank (5).

4. Conditioning strip (100) according to one of claims 2 and 3, characterised in that said reaction vats (11-18) contain respective reagents (31-38) in the form of pellets or of freeze-dried material, and the diluent (50) tank (5) contains a quantity of diluent (50).

5. Apparatus for performing the method according to claim 1, by means of the strip according to one of claims 2 to 4, said apparatus comprising a cabinet (102) constituted by a support table (102) having a transparent lid (107), said support table being fitted with:

- a central turntable (103) having drive means for causing it to rotate about a vertical asix (104),
- a gantry (106) passing over said assembly having a photometer with several read heads situated above the reaction vats of a strip (100);
- a central unit for controlling the above means, characterized in that:
- on the one hand, the central turntable (103) has a diametrically extending groove (130) whose width is slightly greater than the width of a conditioning strip (100), and whose radius is slightly longer than the length of such a strip (100);
- on the other hand, the central turntable (103) has a coplanar and coaxial peripheral ring (105) and means for rotating it slowly and independently of said central turntable (103), and having a plurality of radially extending housings (110) for receiving conditioning strips (100);
- and finally, the gantry (106) passes over the peripheral ring (105) and supports mechanical means (132, 134, 140, 148) for shifting a conditioning strip (100) in translation from a radial housing (110) in said ring (105) into th groove of said turntable (103) and vice versa.

# FIG.1

EP 0 197 866 B1

FIG.2

EP 0 197 866 B1

FIG.3

# FIG.4

# FIG.5

EP 0 197 866 B1

FIG.6

FIG.7

FIG.8

FIG.9

EP 0 197 866 B1

FIG.10

FIG.11

FIG.13

FIG.12

# FIG.14

# FIG.15

301 130 100 4 103 105

130 100 4 302 103 105

27

EP 0 197 866 B1

# FIG.16

# FIG.17

EP 0 197 866 B1

FIG.18

FIG.19

# FIG.20

# FIG.21

FIG.22

FIG.23

FIG.24

FIG.25

FIG.26

FIG.27